# EUROPÄISCHE PATENTANMELDUNG

(11) **EP 3 401 748 A1**
(43) Veröffentlichungstag der Anmeldung: **14.11.2018**
(21) Anmeldenummer: 17170179.0
(22) Anmeldetag: 09.05.2017
(51) Int. Cl.: G05B 19/418, G05B 19/042, H04L 29/08

(54) **VERFAHREN ZUM BETRIEB EINES SCHNITTSTELLENGERÄTS FÜR EINE AUTOMATISIERUNGSANLAGE**

(71) Anmelder: Siemens Aktiengesellschaft, 80333 München (DE)
(72) Erfinder: Milovanovic, Igor, 90491 Nürnberg (DE); Heindl, Elisabeth, 90556 Cadolzburg (DE); Kohler, Benjamin, 90419 Nürnberg (DE); Riedl, Wolfgang, 90443 Nürnberg (DE)

(57) **Zusammenfassung**

Die Erfindung ist ein Schnittstellengerät (50) zur Kommunikation mit einer zur Steuerung und/oder Überwachung eines technischen Prozesses (14) bestimmten und zumindest ein Automatisierungsgerät (16) umfassenden Automatisierungshardware sowie ein Verfahren zum Betrieb eines solchen Schnittstellengeräts (50), wobei das Schnittstellengerät (50) eingehende und ausgehende Kommunikation (aus Sicht des Automatisierungsgeräts (16)) über zumindest einen eingehenden Kommunikationspfad (10) bzw. zumindest einen ausgehenden Kommunikationspfad (12) abwickelt, nämlich ausgehende Kommunikation in Form einer Übertragung von Prozessdaten in die Cloud (30) über den oder einen ausgehenden Kommunikationspfad (12) und eingehende Kommunikation in Form einer Übertragung von Daten von einem Entwicklungsrechner (20) über den oder einen eingehenden Kommunikationspfad (10).

## Beschreibung

Die Erfindung betrifft das Gebiet der Automatisierung technischer Prozesse mittels einer entsprechenden Automatisierungshardware. Zur Automatisierungshardware gehören sogenannte Automatisierungsgeräte, also zum Beispiel speicherprogrammierbare Steuerungen, Feldgeräte, Bedien- und Beobachtungsgeräte und dergleichen. Seit geraumer Zeit verschwindet mehr und mehr der Unterschied zwischen lokalen, am Ort des jeweiligen technischen Prozesses installierten Automatisierungsgeräten und dezentralen Automatisierungsgeräten.

Zum ggf. auch entfernten Programmieren, Installieren und/oder Initialisieren eines Automatisierungsgeräts wird eine üblicherweise als Entwicklungsumgebung bezeichnete Software verwendet, die auf einer im Folgenden als Entwicklungsrechner bezeichneten, üblicherweise PC-basierten Hardware abläuft. Zum Laden eines Steuerungsprogramms und/oder Daten vom Entwicklungsrechner auf ein Automatisierungsgerät besteht eine kommunikative Verbindung zwischen dem Entwicklungsrechner und dem jeweiligen Automatisierungsgerät. Die kommunikative Verbindung wird beispielsweise über ein lokales Netzwerk und ein von dem Netzwerk umfasstes und als Schnittstelle zwischen dem Entwicklungsrechner und dem jeweiligen Automatisierungsgerät fungierendes, sogenanntes Gateway hergestellt.

Eine Verarbeitung, Analyse und dergleichen von im Rahmen eines mittels eines solchen Automatisierungsgeräts gesteuerten und/oder überwachten technischen Prozesses entstehender Daten erfolgt heute mehr und mehr in der sogenannten Cloud. Zum Herstellen einer kommunikativen Verbindung mit der Cloud, also mit zumindest einem Gerät in der Cloud, wird ein als Schnittstelle zwischen dem jeweiligen Automatisierungsgerät und der Cloud fungierendes, sogenanntes Edge Device verwendet. Ein solches Edge Device verfügt zum Zwecke der Verbindung mit der Cloud über entsprechende Kommunikationsfunktionalität, also im weitesten Sinne über einen (leitungslosen oder leitungsgebundenen) Internetzugang und eine Softwarefunktionalität zur Verwendung üblicher Internetprotokolle, zum Beispiel HTTP und/oder HTTPS.

Eine Aufgabe der vorliegenden Erfindung besteht darin, eine verbesserte Schnittstellenfunktion von und zur Automatisierungshardware in einem technischen Prozess anzugeben.

Diese Aufgabe wird erfindungsgemäß mittels eines Schnittstellengeräts mit den Merkmalen des Anspruchs 1 gelöst, welches zur Kommunikation mit einer zur Steuerung und/oder Überwachung eines technischen Prozesses bestimmten und zumindest ein Automatisierungsgerät umfassenden Automatisierungshardware vorgesehen ist, sowie mittels eines Verfahrens zum Betrieb eines solchen Schnittstellengeräts.

Danach zeichnet sich das Schnittstellengerät dadurch aus, dass es dafür bestimmt und eingerichtet ist, eingehende und ausgehende Kommunikation (jeweils aus Sicht des zumindest einen Automatisierungsgeräts) über zumindest einen eingehenden Kommunikationspfad bzw. zumindest einen ausgehenden Kommunikationspfad abzuwickeln. Ausgehende Kommunikation wird dabei in Form einer Übertragung von Prozessdaten in die Cloud über den oder einen ausgehenden Kommunikationspfad abgewickelt. Eingehende Kommunikation in Form einer Übertragung von Daten von einem Entwicklungsrechner wird über den oder einen eingehenden Kommunikationspfad abgewickelt.

Das hier vorgeschlagene Schnittstellengerät vereinigt die Funktion zumindest eines Gateways, welches bisher Teil des eingehenden Kommunikationspfads von einem Entwicklungsrechner zu zumindest einem Automatisierungsgerät war, und die Funktion zumindest eines Edge Devices, welches bisher den ausgehenden Kommunikationspfad zur Übermittlung von Prozessdaten in die Cloud bereitgestellt hatte. An die Stelle bisher eigenständiger Geräte, die einzeln zu installieren, zu konfigurieren und zu warten waren, tritt ein einzelnes Gerät.

Beim Betrieb eines solchen Schnittstellengeräts kommen zwei im Wesentlichen gleichwertige, alternativ verwendbare Verfahren in Betracht: Einerseits besteht die Möglichkeit, dass für die eingehende Kommunikation über den oder einen ausgehenden Kommunikationspfad eine Adresse des Schnittstellengeräts, zum Beispiel eine Adresse des Geräts selbst zusammen mit einer Portnummer des Geräts, an den Entwicklungsrechner übermittelt wird und der Entwicklungsrechner unter der so erhaltenen Adresse die Kommunikation mit dem Schnittstellengerät aufnimmt. Andererseits besteht die Möglichkeit, dass für die eingehende Kommunikation der oder ein ausgehender Kommunikationspfad getunnelt wird und der Entwicklungsrechner über den getunnelten ausgehenden Kommunikationspfad die Kommunikation mit dem Schnittstellengerät aufnimmt. Beiden Varianten ist gemein, dass jeweils der ausgehende Kommunikationspfad verwendet wird, um die Daten für den eingehenden Kommunikationspfad an die Gegenstelle, nämlich den oder einen Entwicklungsrechner, zu übermitteln und/oder den eingehenden Kommunikationspfad zu initialisieren.

Für die weitere Beschreibung gilt zur Vermeidung unnötiger Wiederholungen, dass Merkmale und Details, die im Zusammenhang mit dem Verfahren zum Betrieb des Schnittstellengeräts sowie eventueller Ausgestaltungen beschrieben sind, selbstverständlich auch im Zusammenhang mit und im Hinblick auf ein zur Durchführung des Verfahrens eingerichtetes Schnittstellengerät und umgekehrt gelten. Dementsprechend kann das Verfahren auch mittels einzelner oder mehrerer Verfahrensmerkmale fortgebildet sein, die sich auf Verfahrensschritte beziehen, die von dem Schnittstellengerät im Betrieb ausgeführt werden. Ebenso kann das Schnittstellengerät auch durch Mittel fortgebildet sein, welche das Schnittstellengerät zur Ausführung von im Rahmen des Verfahrens ausgeführten Verfahrensschritten ertüchtigen. Folglich gelten Merkmale und Details, die im Zusammenhang mit dem genannten Verfahren und eventueller Ausgestaltungen beschrieben sind, selbstverständlich auch im Zusammenhang mit und im Hinblick auf das zur Durchführung des Verfahrens bestimmte Schnittstellengerät und jeweils umgekehrt, so dass bezüglich der Offenbarung zu den einzelnen Aspekten der Erfindung stets wechselseitig Bezug genommen wird bzw. werden kann.

Der Vorteil der Erfindung besteht darin, dass die Funktionalität zweier bisher unabhängiger Geräte in einem Gerät vereinigt wird. Dies erfolgt zum Beispiel, indem die bisherige Funktionalität des Gateways in zumindest einem sogenannten Container gekapselt wird und zusammen mit den ohnehin in einem oder mehreren Containern gekapselten Softwarefunktionen des bisherigen Edge Devices auf dem Schnittstellengerät als in einem Container gekapselte Softwarefunktionen vorgehalten werden.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Schnittstellengeräts oder eines durch das Schnittstellengerät ausgeführten Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Schnittstellengeräts umfasst dieses unabhängige Softwarefunktionen, von denen jeweils zumindest eine die ausgehende und die eingehende Kommunikation abwickelt. Die zumindest eine Softwarefunktion, welches die ausgehende Kommunikation abwickelt, umfasst eine Implementation zumindest eines Teils der Funktion eines bisherigen Edge Devices, nämlich zumindest die für die Kommunikation mit der Cloud oder zumindest einem Gerät in der Cloud bestimmte Funktion. Die zumindest eine Softwarefunktion, welches die eingehende Kommunikation abwickelt, umfasst eine Implementation zumindest eines Teils der Funktion eines bisherigen Gateways, nämlich zumindest die für die Kommunikation mit zumindest einem Entwicklungsrechner bestimmte Funktion.

Bei einer besonderen Ausführungsform des Schnittstellengeräts sind die unabhängigen Softwarefunktionen in einem Software-Container oder in einer virtuellen Maschine gekapselt. Dies erlaubt eine besonders einfache Realisierung des Schnittstellengeräts, indem - vereinfacht ausgedrückt - die bisherige Softwarefunktionalität eines Gateways einerseits und eines Edge Devices andererseits in jeweils gekapselter Form (Software-Container oder virtuelle Maschine) in das Schnittstellengerät übernommen werden kann.

Im Folgenden wird - nur im Interesse einer besseren Lesbarkeit der nachfolgenden Beschreibung und ohne Verzicht auf eine weitergehende Allgemeingültigkeit - auf einen Software-Container kurz als Container Bezug genommen und die Beschreibung auf Basis zumindest eines solchen Containers fortgesetzt. Dabei ist stets mitzulesen, dass eine Kapselung einer Softwarefunktion genauso auch in einer virtuellen Maschine möglich ist, sodass der Begriff "Container" jeweils "Container oder virtuelle Maschine" bedeutet.

Bei einer besonderen Ausführungsform des auf einer Tunnelung des ausgehenden Kommunikationspfads basierenden Verfahrens zum Betrieb des Schnittstellengeräts wird im Rahmen der Tunnelung des ausgehenden Kommunikationspfads als Socket eine Instanz eines Socket-Objekts an den Entwicklungsrechner übermittelt und der Entwicklungsrechner nimmt über den erhaltenen Socket die Kommunikation mit dem Schnittstellengerät auf.

Das genannte und im Folgenden mit weiteren Details beschriebene Verfahren ist zur automatischen Ausführung bevorzugt in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Schnittstellengerät, in dessen Speicher als Mittel zur Durchführung des Verfahrens und seiner Ausgestaltungen ein solches Computerprogramm geladen oder ladbar ist. Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von den Begriffen Software oder Computerprogramm auch andere Implementationsmöglichkeiten, nämlich insbesondere eine Implementation in Firmware oder in Firm- und Software oder in Firm- und Hardware, umfasst sind.

Bei einer Ausführungsform des Computerprogramms ist dieses dafür bestimmt und eingerichtet, dass mittels des Computerprogramms die folgenden Schritte ausgeführt werden können und beim Betrieb des Schnittstellengeräts ausgeführt werden: Ermitteln einer Adresse des Schnittstellengeräts; Übermitteln der ermittelten Adresse über den ausgehenden Kommunikationspfad an einen entfernten Entwicklungsrechner und Empfangen von Daten von dem oder einem Entwicklungsrechner unter der übermittelten Adresse und Weiterleiten der empfangenen Daten an die für das Schnittstellengerät erreichbare Automatisierungshardware.

Bei einer weiteren Ausführungsform ist dieses dafür bestimmt und eingerichtet, dass mittels des Computerprogramms die folgenden Schritte ausgeführt werden können und beim Betrieb des Schnittstellengeräts ausgeführt werden: Initialisieren eines Sockets als Instanz eines Socket-Objekts; Übermitteln des Sockets über den ausgehenden Kommunikationspfad an einen entfernten Entwicklungsrechner und Empfangen von Daten von dem oder einem Entwicklungsrechner unter der übermittelten Adresse und Weiterleiten der empfangenen Daten an die für das Schnittstellengerät erreichbare Automatisierungshardware.

Das Computerprogramm kann sowohl die Computerprogrammanweisungen für die Ermittlung einer Adresse des Schnittstellengeräts usw. wie auch die Computerprogrammanweisungen für die Initialisierung eines Sockets usw. umfassen. Dann kann eine der beiden Varianten wahlweise verwendet werden. Ggf. können auch beide Varianten parallel verwendet werden.

Insgesamt ist die hier vorgeschlagene Neuerung damit auch ein Schnittstellengerät wie hier und im Folgenden beschrieben, welches eine Verarbeitungseinheit in Form von oder nach Art eines Mikroprozessors und einen Speicher aufweist, wobei in den Speicher ein Computerprogramm der oben skizzierten Art geladen ist, das beim Betrieb des Schnittstellengeräts durch dessen Verarbeitungseinheit ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Übersichtsdarstellung mit wesentlichen Kommunikationspfaden von und zu einer Automatisierungshardware und einem Gateway einerseits sowie einem Edge Device andererseits als Schnittstelle in den Kommunikationspfaden,
- FIG 2: eine Übersichtsdarstellung gemäß FIG 1 mit dem hier vorgeschlagenen Schnittstellengerät und
- FIG 3: das Schnittstellengerät.

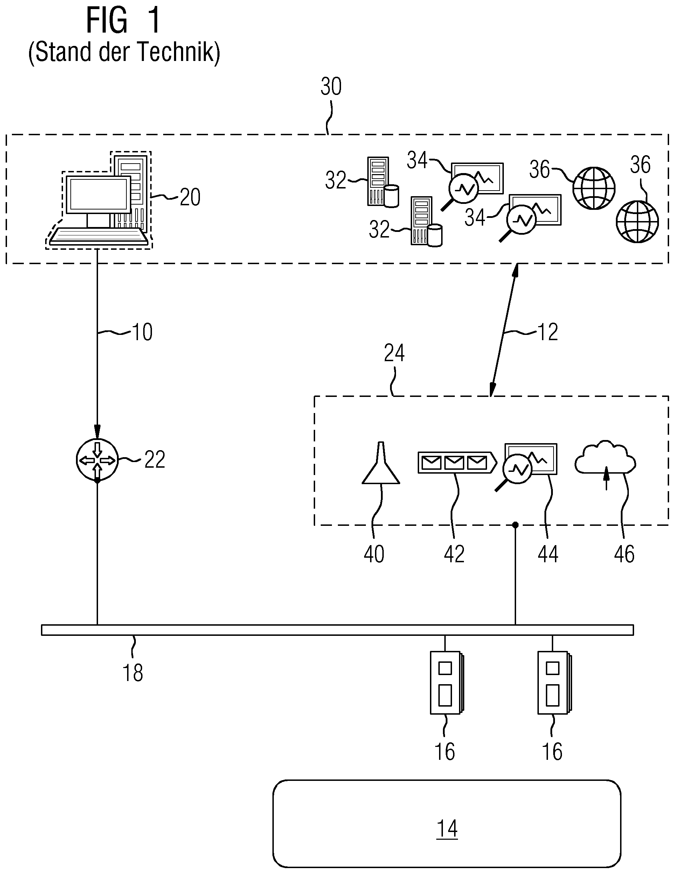

FIG 1 zeigt in Form einer schematisch vereinfachten Übersichtsdarstellung wesentliche Kommunikationspfade 10, 12 einerseits zum oder beim Programmieren und/oder Warten einer zur Steuerung und/oder Überwachung eines technischen Prozesses 14 bestimmen Automatisierungshardware (eingehender Kommunikationspfad 10) und andererseits zur Übermittlung während der Steuerung und/oder Überwachung des jeweiligen technischen Prozesses 14 entstehender Prozessdaten (ausgehender Kommunikationspfad 10).

Der jeweilige, hier nicht näher gezeigte technische Prozess 14 wird in grundsätzlich an sich bekannter Art und Weise mittels der zumindest ein Automatisierungsgerät 16, zum Beispiel eine speicherprogrammierbare Steuerung oder dergleichen, umfassenden Automatisierungshardware gesteuert und/oder überwacht. Mehrere Automatisierungsgeräte 16 sind in ebenfalls grundsätzlich an sich bekannter Art und Weise über einen Bus 18, zum Beispiel einen Feldbus, kommunikativ verbunden.

An den Bus 18 ist zumindest temporär ein als Schnittstelle zwischen der Automatisierungshardware, nämlich zumindest einem Automatisierungsgerät 16, und einem Entwicklungsrechner 20 fungierendes Gerät angeschlossen. Ein solches Gerät wird üblicherweise als Gateway 22 bezeichnet und das oder jedes Gateway 22 ist Teil eines der eingangs genannten Kommunikationspfade 10, 12, nämlich desjenigen Kommunikationspfads 10, über den Daten an die Automatisierungshardware übermittelt werden. Diese Übertragungsrichtung wird im Folgenden - bezogen auf die Automatisierungshardware - als "eingehend" (inbound) und entsprechend der Kommunikationspfad als eingehender Kommunikationspfad 10 bezeichnet. Dabei gilt es darauf hinzuweisen, dass über den eingehenden Kommunikationspfad 10 durchaus auch Daten von der Automatisierungshardware an den oder einen Entwicklungsrechner 20 übertragen werden können. Die Bezeichnung des Kommunikationspfads 10 als "eingehend" bezieht sich auf die üblicherweise vorherrschende Übertragungsrichtung.

Auf dem Entwicklungsrechner 20 wird eine sogenannte Entwicklungsumgebung ausgeführt, also eine Software zum Erstellen und Ändern eines Steuerungsprogramms für ein Automatisierungsgerät 16 sowie zum Laden eines solchen Steuerungsprogramms in einen Speicher eines Automatisierungsgeräts 16. Die dabei notwendige Datenübertragung vom Entwicklungsrechner 20 zum jeweiligen Automatisierungsgerät 16 und/oder vom Automatisierungsgerät 16 zum Entwicklungsrechner 20 läuft über das Gateway 22 und den eingehenden Kommunikationspfad 10.

Der andere eingangs genannte Kommunikationspfad 12 umfasst zumindest ein sogenanntes Edge Device 24. Dieses ist ebenfalls an den Bus 18 angeschlossen und fungiert als Schnittstelle zwischen dem oder einem Automatisierungsgerät 16 und der sogenannten Cloud 30. In der Cloud 30 sind in grundsätzlich an sich bekannter Art und Weise Speicher 32 und/oder Datenbanken 32 für im Rahmen der Steuerung und/oder Überwachung des technischen Prozesses 14 entstehende Prozessdaten verfügbar. Des Weiteren sind in der Cloud 30 in ebenfalls grundsätzlich an sich bekannter Art und Weise zum Beispiel Analysefunktionen 34 oder grundsätzlich beliebige Applikationen 36 zur Ver- oder Bearbeitung solcher Prozessdaten verfügbar. Die Richtung der Kommunikation über das Edge Device 24 oder über ein Edge Device 24 wird - zur Unterscheidung von dem eingehenden Kommunikationspfad 10 über das Gateway 22 - als "ausgehend" (outbound) und der Kommunikationspfad entsprechend als ausgehender Kommunikationspfad 12 bezeichnet. Auch hier gilt es darauf hinzuweisen, dass über diesen Kommunikationspfad 12 durchaus auch Daten aus der Cloud 30 an die Automatisierungshardware übertragen werden können. Entsprechend bezieht sich auch hier die Bezeichnung des Kommunikationspfads 12 als "ausgehend" auf die üblicherweise vorherrschende Übertragungsrichtung.

Zum Sammeln, Vorverarbeiten und/oder Weiterleiten von im technischen Prozess 14 und/oder aufgrund von dessen Steuerung und/oder Überwachung entstehenden Daten verfügt das Edge Device 24 über entsprechende Edge Device-Softwarefunktionen 40, 42, 44, 46, die oftmals einzeln oder in Kombination mit zumindest einer weiteren Edge Device-Softwarefunktion 40-46 zum Beispiel in sogenannten Containern gekapselt sind. Die Kapselung einer Edge Device-Softwarefunktion 40-46 oder einer grundsätzlich beliebigen Softwarefunktion in einem Container ist grundsätzlich an sich bekannt. Insoweit kann beispielhaft auf die unter der Bezeichnung Docker bekannte Software verwiesen werden, mittels derer eine Edge Device-Softwarefunktion 40-46 mithilfe einer sogenannten Betriebssystemvirtualisierung in einem Container isoliert werden kann.

In der Darstellung in FIG 1 sind zur Veranschaulichung solcher Container und darin gekapselter Edge Device-Softwarefunktionen 40, 42, 44, 46 beispielhaft eine erste Edge Device-Softwarefunktion 40 zur Vorverarbeitung ("Preprocessing") von Prozessdaten, insbesondere zur Reduktion der Datenmenge, eine zweite Edge Device-Softwarefunktion 42 zum Zusammenfassen ("Queuing") von Prozessdaten für eine spätere Übermittlung in die Cloud, eine dritte Edge Device-Softwarefunktion 44 zur Analyse der Prozessdaten und eine vierte Edge Device-Softwarefunktion 46 zur Übertragung von Prozessdaten in die Cloud 30 gezeigt.

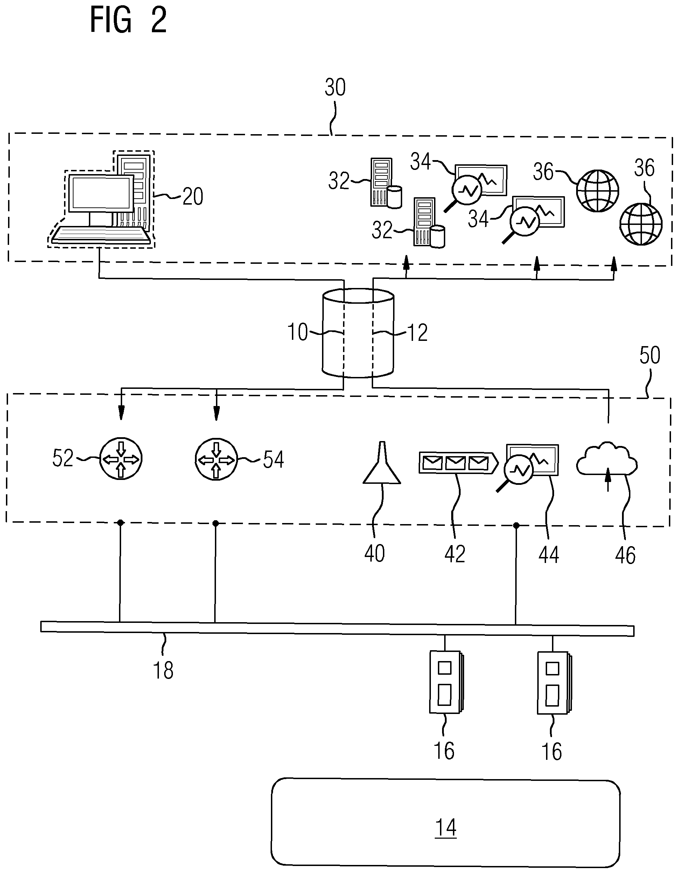

Die Darstellung in FIG 2 zeigt - schematisch vereinfacht - die hier vorgeschlagene Neuerung, die funktional die in FIG 1 gezeigte Konfiguration ersetzt. An die Stelle zumindest zweier unabhängiger Geräte, nämlich eines Gateways 22 und eines Edge Devices 24, tritt ein Gerät, welches die Funktionalität eines Gateways 22 und eines Edge Devices 24 vereinigt. Dieses Gerät wird im Folgenden als Schnittstellengerät 50 bezeichnet, denn es fungiert einerseits als Schnittstelle zwischen zumindest einem Entwicklungsrechner 20 und der Automatisierungshardware und andererseits als Schnittstelle zwischen der Automatisierungshardware und der Cloud 30. Das Schnittstellengerät 50 ist also sowohl Teil des eingehenden Kommunikationspfads 10 wie auch Teil des ausgehenden Kommunikationspfads 12. Weil das Schnittstellengerät 50 die Funktionalität eines Gateways 22 oder zumindest eines Gateways 22 sowie eines Edge Devices 24 oder zumindest eines Edge Devices 24 vereinigt, kann das Schnittstellengerät 50 auch als "Hybrid Gateway-Edge Device" bezeichnet werden.

Das Schnittstellengerät 50 umfasst für die bisherigen Funktionen des Gateways 22 sowie die bisherigen Funktionen des Edge Devices 24 jeweils in einem Container gekapselte Softwarefunktionen 40-46; 52, 54 (Edge Device-Softwarefunktionen 40-46; Gateway-Softwarefunktionen 52, 54). Bei diesen Softwarefunktionen handelt es sich einerseits um diejenigen Softwarefunktionen 40-46, die bereits das Edge Device 24 als Edge Device-Softwarefunktionen 40-46 umfasst hatte, und andererseits um zumindest eine Gateway-Softwarefunktion 52, 54 mit der Funktionalität oder zumindest einem Teil der Funktionalität des bisherigen Gateways 22. Dazu gehören zum Beispiel eine erste Gateway-Softwarefunktion 52, welche eine Kommunikation mit zumindest einem Automatisierungsgerät 16 ermöglicht und entsprechend zur Verarbeitung des oder jedes dafür vorgesehenen Kommunikationsprotokolls eingerichtet ist, sowie eine zweite Gateway-Softwarefunktion 54, welche eine Kommunikation mit der Cloud 30, insbesondere zumindest einem in der Cloud 30 erreichbaren Entwicklungsrechner 20, ermöglicht und entsprechend zur Verarbeitung des oder jedes dafür vorgesehenen Kommunikationsprotokolls, insbesondere TCP/IP, eingerichtet ist.

Die erste Gateway-Softwarefunktion 52 und die zweite Gateway-Softwarefunktion 54 und ggf. weitere, nicht gezeigte Gateway-Softwarefunktionen sind einzeln oder zusammen mit zumindest einer weiteren Gateway-Softwarefunktion 52, 54 - wie oben beschrieben - in einem Container gekapselt.

Beim Betrieb des Schnittstellengeräts 50 läuft die ausgehende Kommunikation - wie bisher bei einem Edge Device 24 (FIG 1) - über den beim Schnittstellengerät 50 beginnenden ausgehenden Kommunikationspfad 12. Bezüglich der eingehenden Kommunikation über das Schnittstellengeräts 50 gibt es zwei Möglichkeiten:
Gemäß einer ersten Möglichkeit wird für die eingehende Kommunikation über den oder einen ausgehenden Kommunikationspfad 12 eine Adresse des Schnittstellengeräts 50, zum Beispiel eine IP-Adresse des Schnittstellengeräts 50 zusammen mit einer Portnummer (tcp://somedevice.somedomain.net:9200), an den Entwicklungsrechner 20 übermittelt und der Entwicklungsrechner 20 nimmt über die so erhaltene Adresse die Kommunikation mit dem Schnittstellengerät 50 auf. Die kommunikative Verbindung zwischen dem Entwicklungsrechner 20 und dem Schnittstellengerät 50 unter der zuvor übermittelten Adresse ist der damit eingerichtete eingehende Kommunikationspfad 10.

Gemäß einer zweiten Möglichkeit wird für die eingehende Kommunikation der oder ein ausgehender Kommunikationspfad 12 getunnelt und der Entwicklungsrechner 20 nimmt über den getunnelten ausgehenden Kommunikationspfad 12 die Kommunikation mit dem Schnittstellengerät 50 auf. Die kommunikative Verbindung zwischen dem Entwicklungsrechner 20 und dem Schnittstellengerät 50 über den getunnelten ausgehenden Kommunikationspfad 12 ist der mit der Tunnelung eingerichtete eingehende Kommunikationspfad 10.

Bei einer speziellen Variante dieser zweiten Möglichkeit wird im Rahmen der Tunnelung des ausgehenden Kommunikationspfads 12 als Socket eine Instanz eines Socket-Objekts, insbesondere eine Instanz eines Web-Socket-Objekts, an den Entwicklungsrechner 20 übermittelt und der Entwicklungsrechner 20 nimmt über den erhaltenen Socket die Kommunikation mit dem Schnittstellengerät 50 auf. Die kommunikative Verbindung des Entwicklungsrechners 20 über den jetzt auf Seiten des Entwicklungsrechners 20 verfügbaren Socket mit dem Schnittstellengerät 50 ist dann der mittels des Sockets eingerichtete eingehende Kommunikationspfad 10.

Ein ausdrücklich nur zur Veranschaulichung dienendes Beispiel für eine Initialisierung eines solchen Sockets ist nachfolgend angegeben. Danach wird der Socket zunächst durch das Schnittstellengerät 50 initialisiert:
socket.out = somedevice.somedomain.net
socket.in = NIL,
wobei "somedevice.somedomain.net" die Adresse des Schnittstellengeräts 50 ist. Diese wird als Adresse des ausgehenden Ports des Sockets eingetragen. Mittels des Sockets können also Daten an diese Adresse, also an das Schnittstellengerät 50, übertragen werden. Der so initialisierte Socket wird über den ausgehenden Kommunikationspfad 12 an den Entwicklungsrechner 20 gesandt. Dieser vervollständigt die Initialisierung des Sockets, indem auch die bisher noch fehlende Adresse versorgt wird:
socket.in = somepc.somedomain.net,
wobei "somepc.somedomain.net" die Adresse des Entwicklungsrechners 20 ist. Diese wird als Adresse des eingehenden Ports des Sockets eingetragen. Der Socket akzeptiert also Daten von dieser Adresse, also vom Entwicklungsrechner 20. Im Ergebnis können mittels des so vollständig initialisierten Sockets Daten vom Entwicklungsrechner 20 an das Schnittstellengerät 50 übertragen werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

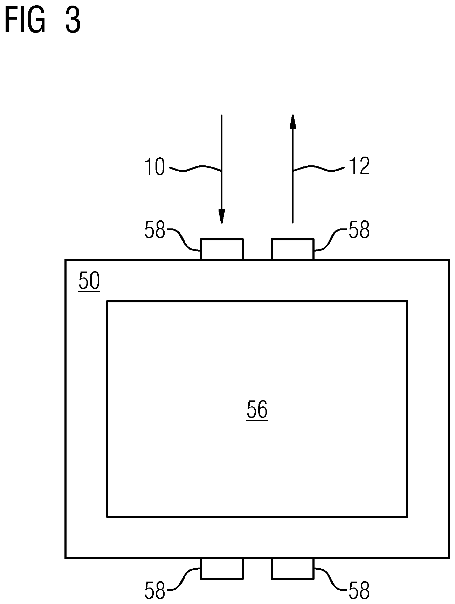

Die Darstellung in FIG 3 zeigt abschließend eine schematisch vereinfachte Darstellung des Schnittstellengeräts 50. Danach umfasst dieses eine Verarbeitungseinheit in Form von oder nach Art eines Mikroprozessors sowie einen Speicher, in den ein Computerprogramm 56 geladen ist, welches beim Betrieb des Schnittstellengeräts 50 durch dessen Verarbeitungseinheit ausgeführt wird. Das Computerprogramm 56 umfasst eine Implementation des hier beschriebenen Verfahrens und gegebenenfalls einzelner oder mehrerer Ausgestaltungen. Dabei ist darauf hinzuweisen, dass das Computerprogramm 56 bei einer besonderen Ausführungsform sowohl einerseits Programmcodeanweisungen für die Einrichtung des eingehenden Kommunikationspfads 10 durch Übermittlung einer Adresse des Schnittstellengeräts 50 an ein externes Gerät, insbesondere den Entwicklungsrechner 20, wie auch andererseits Programmcodeanweisungen für die Einrichtung des eingehenden Kommunikationspfads 10 durch Tunnelung des ausgehenden Kommunikationspfads 12 umfasst und jeweils Programmcodeanweisungen zur Abwicklung der Kommunikation über den so eingerichteten eingehenden Kommunikationspfad 10 und den ausgehenden Kommunikationspfad 12 umfasst. Zur Abwicklung der Kommunikation über den eingehenden Kommunikationspfad 10, den ausgehenden Kommunikationspfad 12 sowie mit der Automatisierungshardware über zumindest einen weiteren (lokalen) Kommunikationspfad weist das Schnittstellengerät 50 in grundsätzlich an sich bekannter Art und Weise sogenannte Ports 58 auf.

Einzelne im Vordergrund stehende Aspekte der hier eingereichten Beschreibung lassen sich damit kurz wie folgt zusammenfassen: Angegeben werden ein Schnittstellengerät 50 zur Kommunikation mit einer zur Steuerung und/oder Überwachung eines technischen Prozesses 14 bestimmten und zumindest ein Automatisierungsgerät 16 umfassenden Automatisierungshardware sowie ein Verfahren zum Betrieb eines solchen Schnittstellengeräts 50. Das Schnittstellengerät 50 wickelt eingehende und ausgehende Kommunikation - aus Sicht des Automatisierungsgeräts 16 - über zumindest einen eingehenden Kommunikationspfad 10 bzw. zumindest einen ausgehenden Kommunikationspfad 12 ab. Ausgehende Kommunikation wird in Form einer Übertragung von Prozessdaten in die Cloud 30 über den oder einen ausgehenden Kommunikationspfad 12 abgewickelt. Eingehende Kommunikation wird in Form einer Übertragung von Daten von einem Entwicklungsrechner 20 über den oder einen eingehenden Kommunikationspfad 10 abgewickelt.

## Patentansprüche

1. Schnittstellengerät (50) zur Kommunikation mit einer zur Steuerung und/oder Überwachung eines technischen Prozesses (14) bestimmten und zumindest ein Automatisierungsgerät (16) umfassenden Automatisierungshardware,
wobei das Schnittstellengerät (50) dafür bestimmt und eingerichtet ist, aus Sicht des zumindest einen Automatisierungsgeräts (16) eingehende und ausgehende Kommunikation über zumindest einen eingehenden Kommunikationspfad (10) bzw. zumindest einen ausgehenden Kommunikationspfad (12) abzuwickeln,
nämlich ausgehende Kommunikation in Form einer Übertragung von Prozessdaten in die Cloud (30) über den oder einen ausgehenden Kommunikationspfad (12) und eingehende Kommunikation in Form einer Übertragung von Daten von einem Entwicklungsrechner (20) über den oder einen eingehenden Kommunikationspfad (10).

2. Schnittstellengerät (50) nach Anspruch 1, mit unabhängigen Softwarefunktionen (40, 42, 44, 46; 52, 54), von denen jeweils zumindest eine die ausgehende und die eingehende Kommunikation abwickelt.

3. Schnittstellengerät (50) nach Anspruch 2, wobei die unabhängigen Softwarefunktionen (40, 42, 44, 46; 52, 54) in einem Software-Container oder in einer virtuellen Maschine gekapselt sind.

4. Verfahren zum Betrieb eines Schnittstellengeräts (50) nach einem der Ansprüche 1 bis 3, wobei für die eingehende Kommunikation über den oder einen ausgehenden Kommunikationspfad (12) eine Adresse des Schnittstellengeräts (50) an den Entwicklungsrechner (20) übermittelt wird und der Entwicklungsrechner (20) über die so erhaltene Adresse die Kommunikation mit dem Schnittstellengerät (50) aufnimmt.

5. Verfahren zum Betrieb eines Schnittstellengeräts (50) nach einem der Ansprüche 1 bis 3, wobei für die eingehende Kommunikation der oder ein ausgehender Kommunikationspfad (12) getunnelt wird und der Entwicklungsrechner (20) über den getunnelten ausgehenden Kommunikationspfad (12) die Kommunikation mit dem Schnittstellengerät (50) aufnimmt.

6. Verfahren nach Anspruch 5, wobei im Rahmen der Tunnelung des ausgehenden Kommunikationspfads (12) als Socket eine Instanz eines Socket-Objekts an den Entwicklungsrechner (20) übermittelt wird und der Entwicklungsrechner (20) über den erhaltenen Socket die Kommunikation mit dem Schnittstellengerät (50) aufnimmt.

7. Computerprogramm (56) mit Programmcodemitteln, um alle Schritte von jedem beliebigen der Ansprüche 4 bis 6 durchzuführen, wenn das Computerprogramm (56) auf einem Schnittstellengerät (50) nach einem der Ansprüche 1 bis 3 ausgeführt wird.

8. Computerprogramm (56) nach Anspruch 7, wobei mittels des Computerprogramms (56) die folgenden Schritte ausgeführt werden:
Ermitteln einer Adresse des Schnittstellengeräts (50);
Übermitteln der ermittelten Adresse über den ausgehenden Kommunikationspfad (12) an einen entfernten Entwicklungsrechner (20) und
Empfangen von Daten von dem oder einem Entwicklungsrechner (20) unter der übermittelten Adresse und Weiterleiten der empfangenen Daten an die für das Schnittstellengerät (50) erreichbare Automatisierungshardware.

9. Computerprogramm (56) nach Anspruch 7 oder 8, wobei mittels des Computerprogramms (56) die folgenden Schritte ausgeführt werden:
Initialisieren eines Sockets als Instanz eines Socket-Objekts;
Übermitteln des Sockets über den ausgehenden Kommunikationspfad (12) an einen entfernten Entwicklungsrechner (20) und
Empfangen von Daten von dem oder einem Entwicklungsrechner (20) unter der übermittelten Adresse und Weiterleiten der empfangenen Daten an die für das Schnittstellengerät (50) erreichbare Automatisierungshardware.

10. Schnittstellengerät (50) nach einem der Ansprüche 1 bis 3, mit einer Verarbeitungseinheit und einem Speicher, in den ein Computerprogramm (56) nach Anspruch 7, 8 oder 9 geladen ist, das beim Betrieb des Schnittstellengeräts (50) durch dessen Verarbeitungseinheit ausgeführt wird.
